Europäisches Patentamt

European Patent Office

Office européen des brevets

(11) Veröffentlichungsnummer: **0 230 258 B1**

(12) **EUROPÄISCHE PATENTSCHRIFT**

(45) Veröffentlichungstag der Patentschrift: **11.09.91**

(51) Int. Cl.⁵: **B62D 1/18**, E02F 9/20, B60K 37/00

(21) Anmeldenummer: **87100382.8**

(22) Anmeldetag: **14.01.87**

(54) **Vertikal verstellbare Steuersäule.**

(30) Priorität: **21.01.86 US 821421**

(43) Veröffentlichungstag der Anmeldung:
**29.07.87 Patentblatt 87/31**

(45) Bekanntmachung des Hinweises auf die
Patenterteilung:
**11.09.91 Patentblatt 91/37**

(84) Benannte Vertragsstaaten:
**DE FR GB**

(56) Entgegenhaltungen:
**DE-A- 2 430 546**
**US-A- 4 209 074**
**US-E- 31 646**

(73) Patentinhaber: **DEERE & COMPANY**
**1 John Deere Road**
**Moline, Illinois 61265(US)**

(72) Erfinder: **Loney, Allan Francis**
**9275 Middle Road**
**Dubuque Iowa 52001(US)**
Erfinder: **Ruhter, Martin Lavern**
**2065 Admiral**
**Dubuque Iowa 52001(US)**

(74) Vertreter: **Feldmann, Bernhard**
**DEERE & COMPANY European Office, Patent**
**Department Steubenstrasse 36-42 Postfach**
**503**
**W-6800 Mannheim 1(DE)**

## Beschreibung

Die Erfindung bezieht sich auf eine vertikal verstellbare und von Wandteilen zumindest teilweise umgebene Steuersäule, insbesondere für Arbeitsfahrzeuge, mit zwei unteren gestellfesten Gelenkachsen, zwei oberen um die unteren Gelenkachsen verschwenkbaren und über mindestens ein ein Lenkrad aufnehmendes Verbindungsglied miteinander verbundenen Gelenkachsen und Schalthebeln, die im Bereich des Lenkrades und beiderseits desselben außerhalb der Wandteile nebeneinanderliegend angeordnet sind und mit Winkelhebeln in Verbindung stehen, die anderenends an gestellfesten Steuerventilen angreifen und drehbar auf mindestens einer Achse aufsitzen, die zwischen den beiden unteren gestellfesten Gelenkachsen gestellfest angeordnet und front- und rückseitig von den Wandteilen umgeben ist.

Derartige Steuersäulen finden bevorzugt bei Gradern Verwendung. Sie sind deshalb verstellbar, damit der Fahrer im sitzenden oder stehenden Zustand das Fahrzeug lenken und seine Arbeitswerkzeuge, wie Planierschild, Losreißzähne etc., betätigen kann.

Bei der Steuersäule (US-A-4 209 074), von der die Erfindung ausgeht, ist nicht nur eine Verstellung des Lenkrades in Fahrtrichtung, sondern auch in Höhenrichtung gegeben. Hierzu sind die die Steuersäule bildenden Wandteile teleskopisch ausgebildet, und die Verschwenkung erfolgt um hydraulisch beaufschlagbare Zylinder. Ebenso müssen auch die Schalthebel an den Winkelhebeln im unteren Bereich über teleskopische Verbindungsglieder angeschlossen sein, wozu weitere Hydraulikzylinder dienen. Diese sind innerhalb der Wandteile angeordnet, so daß die außerhalb der Wandteile liegenden, auf einer zusätzlichen Welle angeordneten Schalthebel nur über übereinanderliegende Drehbuchsen mit den Hydraulikzylindern verbunden werden können, was bei Betätigung eines Schalters zu einer ungewollten Betätigung eines auf derselben Seite liegenden Schalters führen kann. Damit darüber hinaus insbesondere bei der Höhenverstellung keine ungewollte Verstellung der Schalthebel erfolgt, müssen die Zylinder unterschiedlich dimensioniert sein und in einer ganz bestimmten Reihenfolge druckbeaufschlagt werden.

Bei einer nur in Fahrtrichtung verstellbaren Steuersäule (US-E-31646) sind zu beiden Seiten des oberen Verbindungsgliedes Achsen vorgesehen, auf denen die Schalthebel angeordnet sind, so daß ihre Verbindungsstangen sich neben der Steuersäule nach unten erstrecken und damit vollkommen ungeschützt sind. Durch die Anordnung der Schalthebel auf zusätzlichen Achsen entsteht eine aufwendige Bauart.

Die mit der Erfindung zu lösende Aufgabe wird darin gesehen, die Steuersäule mit den Schalthebeln und dem Verbindungsgestänge vorteilhafter auszubilden. Diese Aufgabe ist dadurch gelöst worden, daß die Verbindung der unteren gestellfesten und der oberen Gelenkachsen jeweils über ein frontseitiges und ein rückseitiges Wandteil erfolgt und die Schalthebel auf einer der oberen Gelenkachsen drehbar aufsitzen und jeweils über eine starre, seitlich ausgebogene Verbindungsstange mit den zugehörigen Winkelhebeln gelenkig verbunden sind. Auf diese Weise können die oberen Gelenkachsen zur Aufnahme der Schalthebel ausgenutzt werden, wobei die Verbindungsstangen derart seitlich ausgebogen sind, daß sie sich von oben außen nach unten innen erstrecken. Damit sind ihre unteren Enden durch die Wandteile der Steuersäule gut geschützt, und im oberen Bereich der Steuersäule entsteht ein Leerraum zur einfachen Anbringung beispielsweise einer Verriegelungseinrichtung zum Feststellen der Steuersäule in der jeweils gewünschten Position. Im ganzen gesehen ergibt sich ein relativ einfacher und geordneter Aufbau der Steuersäule mit den zugehörigen Teilen.

Wenn nach der Erfindung die Schalthebel koaxial auf der dem Lenkrad zugelegenen Gelenkachse angeordnet sind, ergibt sich die vorteilhafte Möglichkeit, daß sich beim Verstellen der Steuersäule die Steuerhebel nur in einem ganz geringen Maße verstellen, so daß ihre Zuordnung zu dem Lenkrad immer gleich bleibt und dadurch die Bedienung wesentlich erleichtert wird.

Zweckmäßig können nach der Erfindung alle Winkelhebel koaxial auf einer einzigen Achse angeordnet sein, wobei von den Winkelhebeln sich natürlich ein weiteres Gestänge zu den Ventilen erstreckt.

In der Zeichnung ist ein nachfolgend näher erläutertes Ausführungsbeispiel der Erfindung dargestellt. Es zeigt:

Fig. 1 die Steuersäule mit Steuerhebel und Lenkrad in perspektivischer Darstellung,

Fig. 2 die Steuersäule in ihrer am weitesten nach vorne geschwenkten Position, und

Fig. 3 die Steuersäule in ihrer am weitesten nach rückwärts in Richtung auf den Fahrersitz verschwenkten Position.

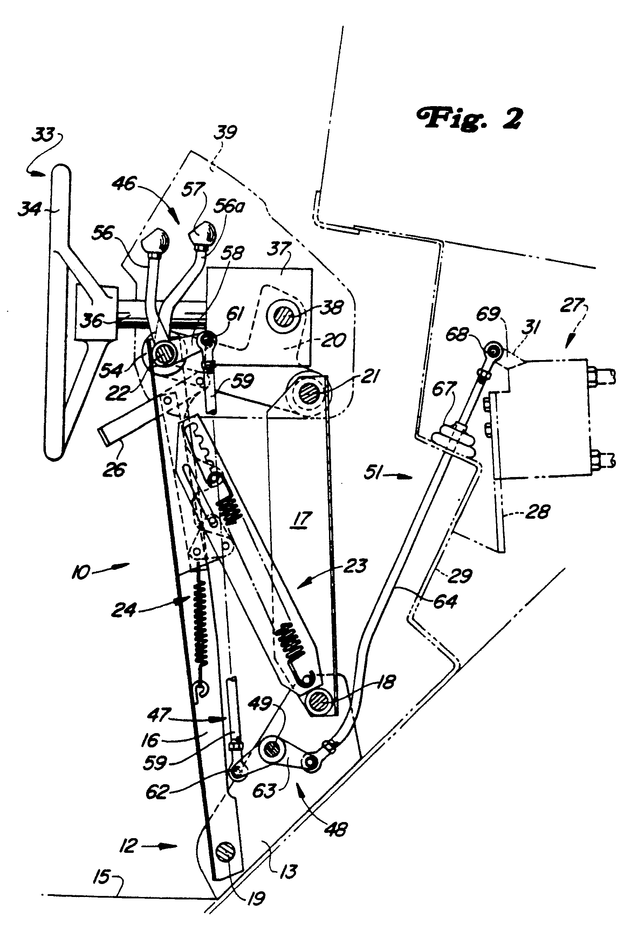

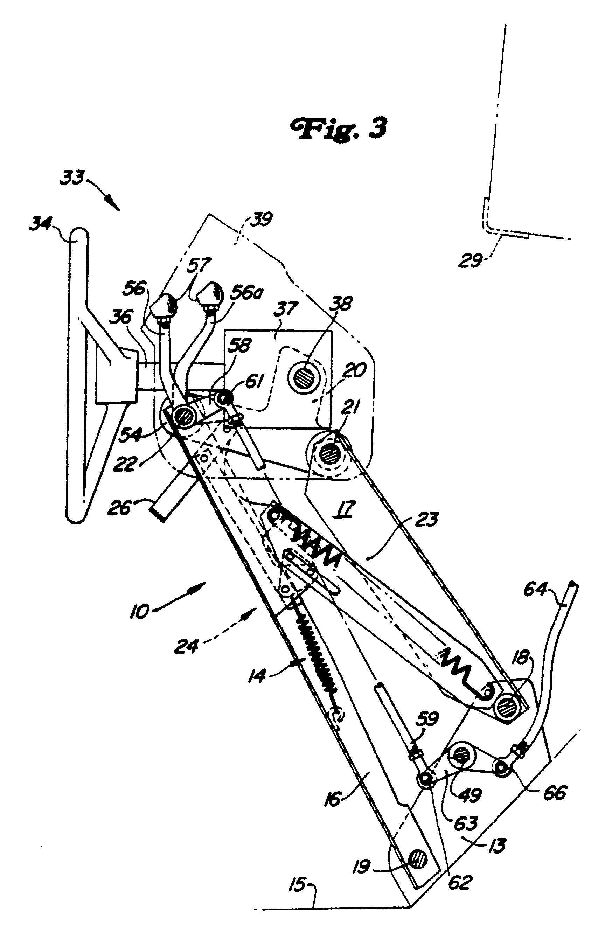

In der Zeichnung ist die verstellbare Steuersäule mit 10 bezeichnet und so ausgestaltet, daß sie auf ein er Plattform 15 eines Bedienungsstandes eines Fahrzeuges, wie zum Beispiel eines Graders, angeordnet werden kann, wobei der Fahrersitz, der sich unmittelbar hinter oder mit Bezug auf die Fig. 2 und 3 links vom Lenkrad befindet, nicht dargestellt ist. Das Fahrzeug, für das die verstellbare Steuersäule 10 bestimmt ist, wird im einzelnen nicht weiter beschrieben, wobei darauf hingewiesen wird, daß derartige Fahrzeuge beispielsweise in der US-A-3 450 213 offenbart sind.

Die Steuersäule 10 ist auf einem Traggestell 11 angeordnet, daß im einzelnen aus zwei einen Querabstand zueinander aufweisenden Platten 12 und 13 besteht, die auf der Plattform 15 des Bedienungsstandes in hochstehender Form angeordnet sind. Im einzelnen besteht die Steuersäule 10 aus einem Ständer 14, der schwenkbar an den Platten 12 und 13 angeordnet ist, und aus ersten und zweiten U-förmig ausgebildeten als Wandteile dienenden Vertikalteilen 16 und 17. Die Vertikalteile 16 und 17 weisen zueinander einen Längsabstand auf und ihr unteres Ende ist schwenkbar an einer von zwei Gelenkachsen 18 und 19 angeordnet, die zueinander parallel sowie horizontal verlaufen und in den Platten 12 und 13 aufgenommen sind. Der Ständer 14 weist ferner noch zwei obere Gelenkachsen 21 und 22 auf, die ebenfalls horizontal verlaufen und zueinander Längsabstand haben und die oberen Enden der Vertikalteile 16 und 17 schwenkbar aufnehmen. Die beiden oberen Gelenkachsen 21 und 22 sind ferner noch durch zwei zueinander Querabstand aufweisenden T-förmig ausgebildete Verbindungsglieder 20 und 20a schwenkbar verbunden. Eine in den Fig. 2 und 3 dargestellte Verriegelungsvorrichtung 23 dient zum lösbaren Sperren der Steuersäule in einer beliebigen Position zwischen den Endstellungen und in den Endstellungen. Zum Lösen der Verriegelungsvorrichtung dient eine Entriegelungsvorrichtung 24, die einen sich nach rückwärts erstreckenden Entriegelungshebel 26 aufweist, der in einfacher Weise von dem Fahrer des Fahrzeuges ergriffen werden kann, um die Verriegelungsvorrichtung zu lösen, und gleichzeitig dazu dient, die gesamte Steuersäule um die unteren Gelenkachsen 18 und 19 nach vorwärts oder nach rückwärts zu verschwenken.

Mit Bezug auf die Fahrtrichtung sind vor der Steuersäule 10 und oberhalb des Traggestells 11 mehrere Ventile 27 vorzugsweise hydraulische Steuerventile vorgesehen, die als Einheit an einer Platte 28 angeordnet sind, die wiederum mit dem vorderen Teil 29 des Bedienungsstandes oder einer Kabine fest verbunden ist. Jedes Ventil 27 ist mit einem Steuerarm 31 versehen, der auf und ab bewegt werden kann, derart, daß dadurch eine vorherbestimmte Funktion bei dem Fahrzeug ausgelöst wird, beispielsweise ein Verstellen des nicht gezeigten Planierschildes in Höhenrichtung, ein Kippen desselben oder Drehen usw.

An den Verbindungsgliedern 20 und 20a ist noch eine Steuereinheit 33 mit einem Lenkrad 34, eine Lenksäule 36 und eine hydraulische Steuervorrichtung 37 angeordnet, wobei die gesamte Steuereinheit 33 schwenkbar mit Bezug auf den Ständer 14 über eine Querwelle 38 angeordnet ist, die wiederum an den Verbindungsgliedern 20 und 20a angreift. Eine Haube 39 dient dazu, die Steuereinheit 33 abzudecken, wobei die Haube auch die notwendigen Instrumente und Schalter zum Anzeigen der verschiedenen Fahrzeugfunktionen aufnehmen kann. Die Steuereinheit 33 ist über einen in der Zeichnung der Einfachheit halber nicht dargestellten Mechanismus unabhängig von der jeweiligen Winkelstellung der Steuersäule 10 verstellbar.

Über die Verriegelungsvorrichtung 23 kann die Steuersäule in einer beliebigen vorgewählten Position zwischen ihren Endstellungen aber auch in den Endstellungen, wie es von der Bedienungsperson gewünscht wird, festgestellt werden, wobei die Entriegelungsvorrichtung 24 über den Entriegelungshebel 26 von der Bedienungsperson dazu ausgenutzt werden kann, die Steuersäule 10 in eine beliebige Schrägposition zu verstellen, wobei nach Loslassen der Entriegelungsvorrichtung 24 die Steuersäule 10 durch die Verriegelungsvorrichtung 23 automatisch in der nunmehr eingestellten Stellung gehalten wird. Fig. 2 zeigt die Steuersäule 10 in einer Stellung, in der sie am weitesten von der in dem Fahrersitz sitzenden Bedienungsperson fortgeschwenkt wurde, wobei Fig. 3 eine Stellung der Steuersäule zeigt, in der diese am weitesten nach rückwärts verschwenkt wurde. In der Stellung nach Fig. 2 kann die Bedienungsperson auch das Fahrzeug im Stehen bedienen, wobei gegebenenfalls die einzelnen Arbeitsgänge besser zu übersehen sind. Dadurch, daß der vordere Vertikalteil 17 kürzer als der rückwärtige Vertikalteil 16 ausgebildet ist und dadurch, daß die vordere untere Gelenkachse 18 höher als die rückwärtige untere Gelenkachse und die vordere obere Gelenkachse 21 tiefer als die rückwärtige obere Gelenkachse 22 liegt, entsteht ein trapezförmiges Gelenkgestänge, das es ermöglicht, daß beim Verschwenken das Lenkrad 34 seine gewählte Stellung beibehält, ohne daß beim Verschwenken eine Winkelverstellung eintritt.

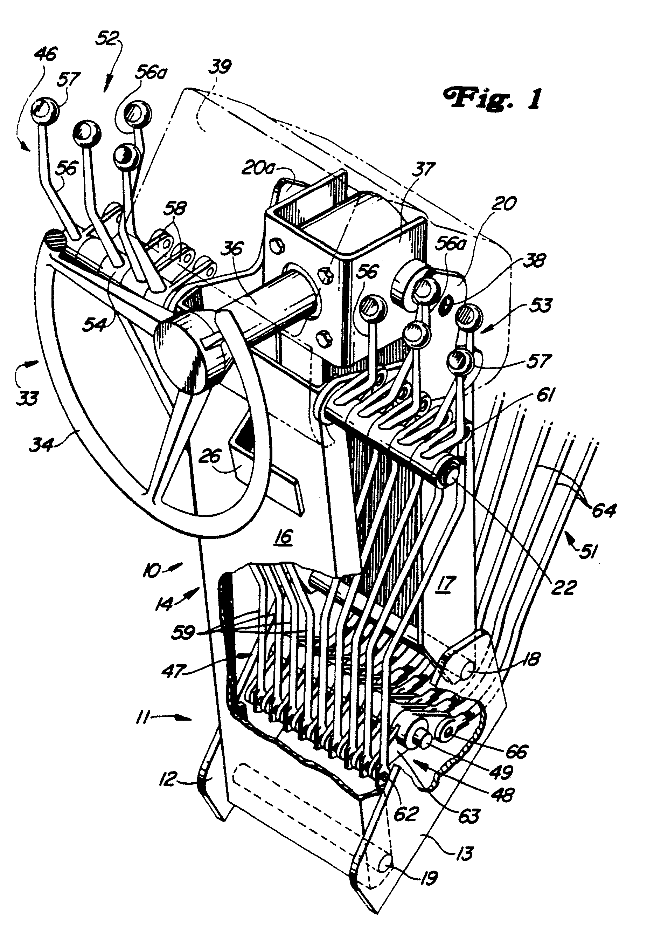

Zum Betätigen der Ventile 27 dient eine Schalthebeleinheit 46, die schwenkbar auf äußeren, sich quer erstreckenden Verlängerungen an der oberen rückwärtigen Gelenkachse 22 angeordnet ist. Die Schalthebeleinheit 46 ist mit einem Verbindungsgestänge 47 schwenkbar verbunden, das sich nach unten zu einer Winkelhebelgruppe 48 erstreckt, die das Verbindungsgestänge gelenkig aufnimmt. Die Winkelhebelgruppe 48 ihrerseits ist auf einer Achse 49 drehbar angeordnet, die sich zwischen den Platten 12 und 13 erstreckt und mit diesen befestigt ist. Eine Steuerstangengruppe 51 wiederum greift schwenkbar an der Winkelhebelgruppe 48 und an den Steuerarmen 31 der Steuerventile 27 an. Im einzelnen besteht die Schalthebeleinheit 46 aus linken und rechten Gruppen 52 und 53 von winklig ausgebildeten Schalthebeln 56, von denen jeder eine Buchse 54 aufweist, die verschiebbar und drehbar auf der Gelenkachse 22 angeordnet ist. Ein sich nach oben erstreckender Schenkel eines jeden Schalthebels 56 ist noch mit einem Knopf 57 versehen, der mit dem oberen Ende verbunden ist und die Funktion anzeigt, die bei Betätigung des entsprechenden Schalthebels ausgelöst werden kann. Ein weiterer Schenkel 58 des Schalthebels 56 erstreckt sich von der Buchse 54 in radialer Richtung und dient zur Verbindung mit dem Verbindungsgestänge 47. Aus Fig. 1 ist zu ersehen, daß jeweils nebeneinanderliegende Schalthebel unterschiedlichen Längsabstand aufweisen, wodurch ein genügender Freiraum zum Erfassen der Schalthebel und damit eine erleichterte Bedienung entsteht.

Das Verbindungsgestänge 47 wiederum besteht aus einer Vielzahl von sich längs erstreckenden, mehr oder weniger identisch ausgebildeten und parallel angeordneten Verbindungsstangen 59, wobei die Anzahl der einzelnen Verbindungsstangen 59 durch die Anzahl der Schalthebel 56 bestimmt ist und wobei die oberen Enden einer jeden Verbindungsstange 59 schwenkbar über mit 61 bezeichnete Anlenkstellen an den Schalthebeln 56 und die unteren Enden der Verbindungsstange 59 über mit 62 bezeichnete Anlenkstellen an der Winkelhebelgruppe 48 angreifen. Aus Fig. 1 ist zu ersehen, daß die die Schalthebel 56 aufnehmenden Verlängerungen an der Gelenkachse 22 sich seitlich neben der Steuersäule befinden, wohingegen die unteren Enden der Verbindungsstangen 59 sich alle vor dem rückwärtigen Vertikalteil 16 befinden, so daß die Verbindungsstangen abgebogen sind und sich von ihrer oberen Seite aus nach innen erstrecken, wodurch in der Mitte etwa in einem Bereich hinter dem Lenkrad 34 sich ein Freiraum ergibt, der dazu ausgenutzt werden kann, in diesem Bereich die Verriegelungsvorrichtung 23 und die Entriegelungsvorrichtung 24 und gegebenenfalls andere Komponenten vorzusehen. Der Freiraum ist, wie Fig. 1 zeigt, in etwa V-förmig. Des weiteren geht aus Fig. 1 hervor, daß die Verbindungsstangen 59 sich in den Ebenen zwischen den vorderen und rückwärtigen Vertikalteilen 16 und 17 befinden, d.h. weder vor noch hinter diesen angeordnet sind, wobei ihre unteren Teile ganz von den U-förmig ausgebildeten Vertikalteilen 16 abgedeckt werden.

Die Winkelhebelgruppe 48 besteht aus mehreren identisch ausgebildeten V-förmigen Winkelhebeln 63, die auf der Achse 49 angeordnet sind, und zwar nebeneinander, so daß sie an die unteren Enden einer jeden Verbindungsstange 49 angelenkt werden können, und daß eine entsprechende Auf- oder Abwärtsbewegung einer jeden der Verbindungsstange 49 in einer entsprechenden Bewegung des zugehörigen Winkelhebel 63 auf der Achse 49 resultiert.

Aus Fig. 2 wiederum ist zu entnehmen, daß die Steuerstangen 51 im einzelnen aus mehreren Querabstand zueinander aufweisenden sich in Längsrichtung erstreckenden Stangen 64 bestehen, wobei sich jede Stange 64 von einer unteren Anlenkstelle 66 an den Winkelhebeln 63 aus nach oben erstreckt, so daß ihre oberen vorderen Enden an die Steuerarme 31 angeschlossen werden können. Da die Stangen 64 unterhalb der vorderen Gelenkachse 18 hindurchgeführt sind, sind sie entsprechend abgebogen, wobei die oberen Bereiche, wie aus Fig. 2 hervorgeht, noch durch Buchsen 67 geführt sind, die in dem vorderen Teil 29 des Fahrerstandes oder der Kabine eingesetzt sind. Die Buchsen 67 sind dabei vorzugsweise aus nachgiebigem Werkstoff hergestellt, wobei die Anlenkstellen der oberen Enden der Stangen 64 an die äußeren Enden 69 der Steuerarme 31 mit 68 bezeichnet sind. Durch diese Anordnung wird eine Auf- und Abbewegung der Winkelhebel 63 in eine Auf- und Abbewegung der Stangen 64 umgeleitet, was wiederum in einer gleichen Bewegung der Steuerarme 31 resultiert.

Insbesondere aus den Fig. 2 und 3 ist zu entnehmen, daß die Anlenkstellen 66 der unteren Enden der Stangen 64 an die Winkelhebel 63 an einer Stelle liegen, die tiefer ist als die Position der Gelenkachse 18 und daß die Achse 49 sich zwischen den Gelenkachsen 18 und 19 allerdings über der Gelenkachse 19 und unter der Gelenkachse 18 befindet.

Aus der vorstehenden Beschreibung geht damit hervor, daß alle Steuerhebel auf einer einzigen Achse, und zwar auf der Gelenkachse 22 angeordnet sind, wobei durch die besondere Anordnung der verschiedenen Anlenkstellen sich ein zweckmäßiges Übertragungsgestänge ergibt, und die zum Betätigen der Ventile 27 erforderlichen Kräfte durch die gewählte Übersetzung entsprechend reduziert werden. Dies gilt sowohl bei einer Betätigung der Steuerhebel in Richtung nach vorne oder wieder zurück. Die trapezförmig ausgebildete Steuersäule bzw. die in dieser Form angeordneten Gelenkachsen und die gewählten Anlenkstellen für das Betätigungsgestänge, insbesondere die Lage der Achse 49 bewirken in ihrer Gesamtheit, daß beim Verschwenken der Steuersäule 10 in oder entgegen der Fahrtrichtung sich die Zuordnung der Steuerhebel bzw. ihrer Knöpfe 57 zu dem Lenkrad 34 kaum ändert, so daß im ganzen gesehen die Steuersäule nach der Erfindung in vorteilhafter Weise weiter verbessert worden ist mit optimalen Schwenk- bzw. Anlenkstellen und relativ wenigen Teilen, und daß bei einer Verstellung der Steuersäule und eingestelltem Lenkrad 34 sich die Zuordnung der Positionen vom Lenkrad 34 und der Schalthebel 56 zu der Bedienungsperson kaum ändert.

## Patentansprüche

1. Vertikal verstellbare und von Wandteilen (16, 17) zumindest teilweise umgebene Steuersäule (10), insbesondere für Arbeitsfahrzeuge, mit zwei unteren gestellfesten Gelenkachsen (18, 19), zwei oberen um die unteren Gelenkachsen (18, 19) verschwenkbaren und über mindestens ein ein Lenkrad (34) aufnehmendes Verbindungsglied (20, 20a) miteinander verbundenen Gelenkachsen (21, 22) und Schalthebeln (56), die im Bereich des Lenkrades (34) und beiderseits desselben außerhalb der Wandteile (16, 17) nebeneinanderliegend angeordnet sind und mit Winkelhebeln (63) in Verbindung stehen, die anderenends an gestellfesten Steuerventilen (27) angreifen und drehbar auf mindestens einer Achse (49) aufsitzen, die zwischen den beiden unteren gestellfesten Gelenkachsen (18, 19) gestellfest angeordnet und front- und rückseitig von den Wandteilen (16, 17) umgeben ist, dadurch gekennzeichnet, daß die Verbindung der unteren gestellfesten und der oberen Gelenkachsen (18, 21 und 19, 22) jeweils über ein frontseitiges und ein rückseitiges Wandteil (17, 16) erfolgt und die Schalthebel (56) auf einer der oberen Gelenkachsen (21, 22) drehbar aufsitzen und jeweils über eine starre, seitlich ausgebogene Verbindungsstange (59) mit den zugehörigen Winkelhebeln (63) gelenkig verbunden sind.

2. Steuersäule (10) nach Anspruch 1, dadurch gekennzeichnet, daß die Schalthebel (56) koaxial auf der dem Lenkrad (34) zugelegenen Gelenkachse (22) angeordnet sind.

3. Steuersäule (10) nach Anspruch 1, dadurch gekennzeichnet, daß die Winkelhebel (63) koaxial auf der Achse (49) angeordnet sind.

## Claims

1. A vertically adjustable steering column (10) at least partly surrounded by wall portions (16, 17), particularly for work vehicles, with two lower articulated axles (18,19) secured to the frame, two upper articulated axles (21,22), pivotable around the lower articulated axles (18, 19) and connected together by at least one connecting member (20, 20a) receiving a steering wheel (34), and gear levers (56), which are disposed next to one another in the vicinity of the steering wheel (34) and on both sides thereof, outwith the wall portions (16, 17) and in connection with bell-crank levers (63) which engage at their other ends on control valves (27) secured to the frame and are rotarily mounted on at least one axle (49), which is secured to the frame between the two lower articulated axles (18, 19) secured to the frame and is surrounded to the front and rear by the wall portions (16, 17), characterised in that the connection of the lower axles secured to the frame and the upper articulated axles (18, 21 and 19, 22) is effected by a frontal and rear wall portion (17, 16) respectively, and the gear levers (56) are rotarily mounted on one of the upper articulated axles (21, 22), and are in each case flexibly connected by a rigid, laterally bent-out connecting rod (59) to the associated bell-crank levers (63).

2. A steering column (10) according to Claim 1, characterised in that the gear levers (56) are disposed coaxially on the articulated axle (22) adjacent to the steering wheel (34).

3. A steering column (10) according to Claim 1, characterised in that the bell-crank levers (63) are disposed coaxially on the axle (49).

## Revendications

1. Colonne de direction (10) réglable verticalement et entourée au moins partiellement à partir des éléments de paroi (16,17), notamment pour des véhicules utilitaires, comportant deux axes inférieurs d'articulation (18,19) solidaires du châssis, deux axes supérieurs d'articulation (21,22) pouvant pivoter autour des axes inférieurs d'articulation (18,19) et reliés entre eux par l'intermédiaire d'au moins un élément de liaison (20,26) recevant un volant (34), et des leviers de commutation (56), qui sont disposés les uns à côté des autres au voisinage du volant (34) et des deux côtés de ce dernier à l'extérieur des éléments de paroi (16,17), et sont raccordés à des leviers coudés (63), qui attaquent, par leurs autres extrémités, des soupapes de commande (27) solidaires du châssis, et sont portés, de manière à pouvoir tourner, sur au moins un axe (49), qui est monté fixe sur le châssis entre les deux axes inférieurs d'articulation (18,19) solidaires du châssis et est entouré, sur le côté avant et sur le côté arrière, par les éléments de paroi (16,17), caractérisée en ce que la liaison des axes inférieurs d'articulation solidaires du châssis et les axes supérieures d'articulation (18,21 et 19,22) est réalisée respectivement par l'intermédiaire d'un élément de paroi avant et d'un élément de paroi arrière (17,16), et les leviers de commutation (56) sont montés rotatifs sur l'un des axes supérieurs d'articulation (21,22) et sont raccordés d'une manière articulée aux leviers coudés associés (63) respectivement par l'intermédiaire d'une bielle rigide (59) coudée latéralement.

2. Colonne de direction (10) selon la revendication 1, caractérisée en ce que les leviers de commutation (56) sont montés coaxialement sur l'axe d'articulation (22) proche du volant (34).

3. Colonne de direction (10) selon la revendication 1, caractérisée en ce que les leviers coudés (63) sont montés coaxialement sur l'axe (49).

Fig. 1

Fig. 2

EP 0 230 258 B1

# Fig. 3